# EUROPEAN PATENT SPECIFICATION

(11) **EP 2 829 441 B1**
(45) Date of publication and mention of the grant of the patent: **11.05.2016**
(21) Application number: 13177812.8
(22) Date of filing: 24.07.2013
(51) Int. Cl.: B60R 25/0215

(54) **Electrical steering column lock for locking a steering column of a motor vehicle and corresponding method for assembling the housing of an electrical steering column lock**
Elektrisches Lenkschloss für die Lenksäulenverriegelung eines Motorfahrzeugs und entsprechendes Verfahren zur Montage des Gehäuses eines elektrischen Lenkschlosses
Dispositif de verrouillage de colonne de direction électrique de verrouillage d'une colonne de direction d'un véhicule automobile et procédé correspondant de montage du boîtier d'un dispositif de verrouillage de colonne de direction électrique

(43) Date of publication of application: 28.01.2015
(73) Proprietor: U-Shin Deutschland Zugangssysteme GmbH, DE-85253 Erdweg (DE)
(72) Inventor: Laval, Anthony, 85221 DACHAU (DE); Lehmeier, Norbert, 85051 INGOSADT (DE)
(74) Representative: Huisman, Aurélien

(56) References cited:
- DE-A1-102004 045 760
- DE-A1-102011 012 040

## Description

The invention relates to an electrical steering column lock for a motor vehicle able to lock and unlock the steering column, also called ESCL.

Document DE 10 2004 045 760 A1 describes a device for locking the steering wheel of a vehicle, the device comprising locking bar for the steering wheel. The locking bar is located in a housing in two parts configured to be fixed together.

An electrical steering column lock used in automotive vehicle usually comprises an electrical motor for controlling the movement of a steering column locking means such as a locking bolt, from a locking position to an unlocking position, in which the steering column is respectively blocked and unblocked in rotation.

The electrical steering column lock comprises a housing for receiving the different elements of the electrical steering column lock. The electrical steering column lock may comprise the locking means such as a locking bolt intended to lock or to unlock the steering column, a spring biasing the locking bolt, the motor, a rotative cam wheel for controlling the locking means movement and a gear intended to be controlled by the motor and controlling the rotation of the cam wheel. The housing of the electrical steering column lock may also receive an electronic circuit for controlling the motor.

The housing usually comprises a plate and a cover placed over the plate thus closing the housing.

Elements of the electrical steering column lock are arranged between the plate and the cover. As an example, the plate may support notably: the motor, the gear, the rotative cam wheel and the locking bolt. According to a known solution, elements of the electrical steering column lock are also fixed to the cover, such as: the motor, the spring biasing the locking bolt, and the electronic circuit for controlling the motor.

The plate of the housing is traditionally fastened to the steering column by bolt fixation.

It is also known to attach the cover to the plate of the housing by using bolts or clamping pins.

However, such solutions for attaching the cover and the plate of the housing are not reliable, because in case of a default of bolt fixation or clamping fixation, the cover will detach from the plate. In solutions wherein some elements of the electrical steering column lock such as the electronic controlling circuit of the motor, the motor and the spring associated to the locking bolt are fixed to the cover, if one or more bolts or clamping pins are damaged or comes loosen which may generate a functional risk.

Thus, there is a need to ensure a robust housing assembly guaranteeing the lock function of the steering column.

This object is achieved according to the invention by an electrical steering column lock according to claim 1.

If there is an incorrect connection between the cover and the plate of the housing, an additional safety is achieved by projections on the cover which are fixed through the fixing means to the plate and to the steering column. In that case, the fixing means for mounting the electrical steering column lock on the steering column can so keep the cover in position.

The second fixing means for attaching the cover and the plate, for example by a crimping process, and the first fixing means for fastening with the steering column together with the plate and the cover projections, generate a redundant fixing system.

Moreover, with such a solution, there are less package, less parts, and a redundancy fixation system.

The electrical steering column lock according to the invention may also comprise one or more of the following characteristics, taken separately or in combination:
According to one aspect, the third fixing means may comprise one projection of the cover abutting against one associated fixing part of the plate.

According to another aspect one projection is provided on the cover so as to at least partially covering an associated fixing part of the plate.

Furthermore, the first fixing means may comprise fixing bolts and the fixing parts of the plate may comprise associated holes for receiving the fixing bolts.

In addition, a projection of the cover may be provided on an associated fixing part of the plate surrounding the hole for receiving an associated fixing bolt.

The second fixing means may comprise crimping means, for example for a hot crimping process.

According to another aspect at least one fixing part is provided at a corner of the plate, for example three fixing parts are provided at corners of the plate.

The second fixing means may be provided on the plate near the fixing parts cooperating with the first fixing means to the steering column.

The invention also relates to a method for assembling the housing of an electrical steering column lock for locking and unlocking a steering column of a motor vehicle, said housing receiving a locking means intended to move for locking and for unlocking the steering column, and comprising:
- a plate comprising at least one fixing part, and
- a cover arranged over the plate for closing the housing,
characterized in that said method comprises the following steps:
- fixing the cover to the plate, and
- fixing the cover and the plate together and together with the steering column through at least one fixing means cooperating with a fixing part of the plate and with a third fixing means of the cover, the cover being attached to the plate by a material deformation process, comprising a crimping process, for example a hot crimping process.

According to another aspect, the cover and the plate are fixed together and to the steering column by bolt fixation.

Other characteristics and advantages of the invention will emerge more clearly on reading the following description, which is given as a non-limiting illustrative example, and the attached drawings, among which:
- figure 1 is a schematic perspective view of the housing of an electrical steering column lock according to the invention for locking or unlocking a steering column of a motor vehicle,
- figure 2 is a schematic view of the electrical steering column lock of figure 1 fastened to the steering column of the motor vehicle,
- figure 3 is an exploded view of the electrical steering column lock of figure 1 showing the housing of the electrical steering column lock and fixing means to the steering column,
- figure 4 is a cutaway view of a part of the electrical steering column lock of figures 1 and 3, showing a locking bolt for locking and unlocking the steering column,
- figure 5 is a schematic view of an embodiment of the electrical steering column lock.

On those figures, the same elements are referred to with the same number.

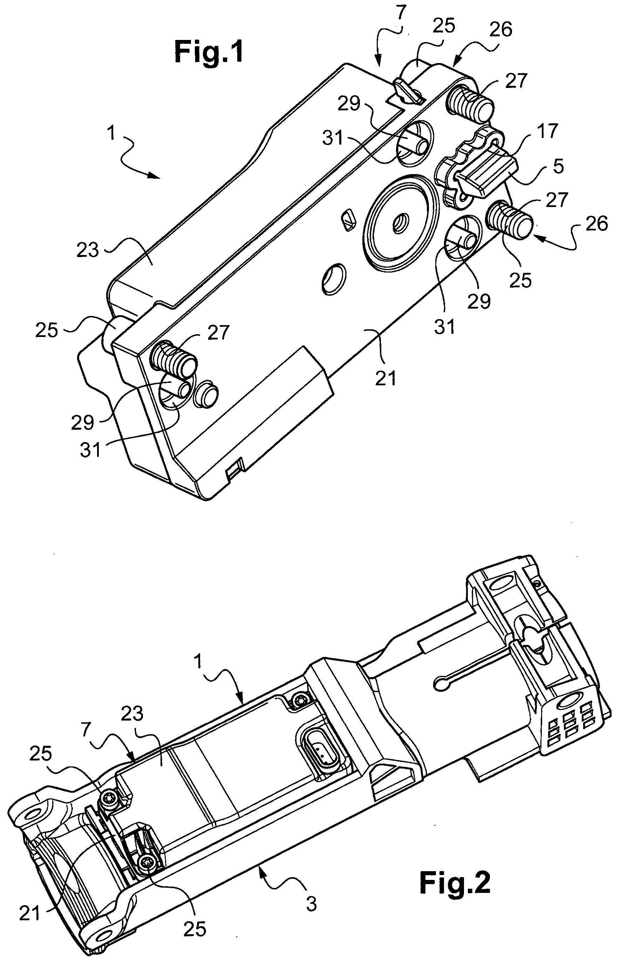

In reference to figures 1 and 2, the invention relates to an electrical steering column lock 1 for a steering column 3 of a motor vehicle comprising a locking means 5 intended to lock or to unlock the steering column 3.

As illustrated in figures 1 to 4, the electrical steering column lock 1 comprises a housing 7 for receiving the locking means 5 and the electrical steering column lock 1 elements for actuating the locking means 5.

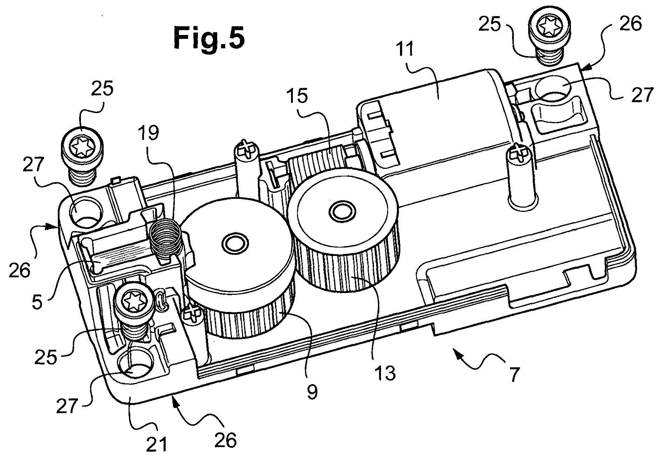

According to the embodiment illustrated in figure 5 the electrical steering column lock 1 may comprise:
- the locking means 5, such as a locking bolt 5,
- a rotative cam wheel 9 for controlling the locking bolt 5 movement,
- a motor 11, and
- a gear 13 intended to be controlled by the motor 11, for example through an endless screw 15. The gear 13 is able to control the rotation of the cam wheel 9 by transmitting with a predefined gear ratio the rotation of the motor 11 to the cam wheel 9.

The motor 11 may be controlled by an electronic circuit (not shown), for example printed on a board called printed circuit board PCB.

In this case, the electrical steering column lock 1 is said electrical since the actuation of the locking bolt 5 is made through an electrical motor 11 controlled via electronics.

Advantageously, the different elements of the electrical steering column lock 1 are arranged in the housing 7 so that the electrical steering column lock 1 presents a high compactness which enables to save space.

The locking bolt 5 is able to be displaced from a locking position to an unlocking position, in which the steering column 5 is respectively blocked and unblocked in rotation.

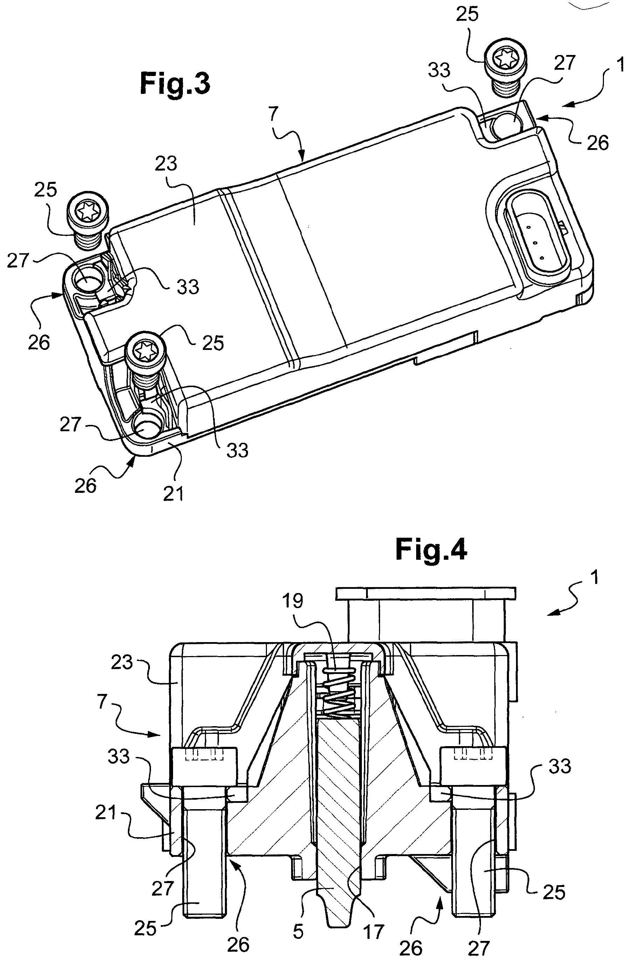

For that purpose, the locking bolt 5, made of one or several assembled parts, is mounted in the housing 7 in order to slide between:
- a locked position in which the locking bolt 5 projects axially through an opening 17 in the housing 7 as illustrated in figures 1 and 4, thus extending towards the steering column 3 when the housing 7 is fastened to the steering column 3, and
- an unlocked position in which the locking bolt 5 is retracted into the housing 7.

The locking bolt 5 may be resiliently biased by a spring 19 in the locked position to lock the steering column 3 by inserting into a recess of the steering column 3 (figure 2).

According to the embodiment illustrated in figures 1 to 4, the housing 7 has a substantially parallelepiped shape.

More precisely, the housing 7 is made in two parts: a plate 21 and a cover 23 arranged over the plate 21. The cover 23 thus closes the housing 7.

The plate 21 has a substantially rectangular shape and the cover 23 has a substantially opened parallelepiped shape complementary to plate 21 to close the housing 7.

As more visible in figure 5, the plate 21 may support the locking bolt 5, the rotative cam wheel 9, the motor 11, and the gear 13. The locking bolt 5 is thus received in an associated opening 17 of the plate 21.

The electronic circuit for controlling the motor 11 may be arranged between both parts 21, 23 of the housing 7.

The electronic circuit for controlling the motor 11, the motor 11 and the spring 19 of the locking bolt 5 may also be fixed to the cover 23. The cover 23 may therefore be provided with associated bearings for the fixation of the electronic circuit, the motor 11, and the spring 19 of the locking bolt 5.

Moreover, the plate 21 is intended to be fastened to the steering column 3. For that purpose, the electrical steering column lock 1 comprises one or more first fixing means 25. The plate 21 comprises associated fixing parts 26 to be fixed to the steering column 3 through the first fixation means 25.

The fixing parts 26 may be provided at corners of the plate 21. In the example shown, the plate 21 comprises three fixing parts 26 respectively provided at three corners of the plate 21.

In the embodiment shown, the plate 21 is intended to be fastened to the steering column 3 by bolt fixation, the first fixing means are in this case fixing bolts 25. Therefore the plate 21 is provided with one or more holes 27, each on an associated fixing part 26 for receiving a complementary fixing bolt 25.

The plate 21 and the cover 23 are also fixed together through second fixing means 29, 31.

For example, the plate 21 and the cover 23 are be fixed together by a material deformation process.

The plate 21 and the cover 23 are fixed together by a crimping process, more precisely a hot crimping process.

To this aim, the second fixing means may comprise complementary crimping pins 29 and receiving holes 31 respectively provided on the plate 21 or the cover 23. In the embodiment shown, the cover 23 is provided with crimping pins 29 inserted in associated receiving holes 31 provided on the plate 21 for hot crimping for example.

By fixing the plate 21 and the cover 23 by hot crimping process, there are no additional parts required. Indeed, the cover 23 may be made of plastic and so it is simple to cast on the cover 23 the crimping pins 29.

Such hot crimping process for attaching the cover 23 to the plate 21 is thus easier than previous solutions using e.g. bolts. The hot crimping process is therefore a cheaper method for assembling the cover 23 and the plate 21.

Besides, the second fixing means 29, 31 may be provided near the fixing parts 26 of the plate 21, here at corners of the plate 21, cooperating with the first fixing means 25 for fastening the housing 7 to the steering column 3.

Moreover, the cover 23 comprises at least one third fixing means 33 provided for cooperating with an associated first fixing means 25 for fixing the housing 7 to the steering column 3.

According to the illustrated embodiment, a third fixing means 33 may comprise one projection 33 of the cover 23 abutting against one associated fixing part 26 of the plate 21.

More precisely, each projection 33 of the cover 23 may cover at least partially one associated fixing part 26 of the plate 21, and being intended to be fixed through the first fixing means 25, here fixing bolts 25, so that the cover 23 and the plate 21 of the housing 7 are fixed together and together with the steering column 3.

In the shown embodiment, the cover 23 has three projections 33 respectively associated to a fixing part 26 of the plate 21. Here, the projections 33 respectively partially surround the hole 27 provided on an associated fixing part 26 of the plate 21, so that the fixing bolts 25 also fasten the cover 23 and the plate 21 of the housing 7 together.

Thus, the fixing bolts 25 contribute to keep the cover 23 in position over the plate 21 of the housing 7.

In other words, the cover 23 and the plate 21 of the housing 7 of the electrical steering column lock 1 are fixed together, here by hot crimping process, and by the fixing bolts 25 provided for fixing the housing 7 on the steering column 3. The cover 23 is fixed twice on the plate 21, first for example by the hot crimping process, secondly by the fixing bolts 25.

This generates a redundant fixing system of the housing assembly 7 so that even if there is an incorrect connection (here hot crimping connection) between the cover 23 and the plate 21, the cover 23 and the plate 21 remain fixed together and therefore together fixed to the steering column.

Such redundant fixing system allows that the cover 23 and the plate 21 are securely kept together.

## Claims

1. Electrical steering column lock (1) for a motor vehicle able to lock and unlock a steering column (3) of the motor vehicle, the electrical steering column lock (1) comprising:
- a locking means (5) intended to move for locking and for unlocking the steering column (3), and
- a housing (7) supporting the locking means (5) and comprising:
o a plate (21) comprising at least one fixing part (26) intended to be fixed to the steering column (3) through first fixing means (25), and
o a cover (23) arranged over the plate (21) for closing the housing (7) and attached to the plate (21) through second fixing means (29, 31), wherein
the cover (23) comprises at least one third fixing means cooperating with associated first fixing means (25) for fixing the housing (7) to the steering column (3), so that the cover (23) is fixed to the plate (21) through the second fixing means (29, 31) and through the first fixing means (25) to the steering column (3), charaterized in that the second fixing means (29, 31) comprise crimping means (29, 31), for example for hot crimping process.

2. Electrical steering column lock (1) according to claim 1, wherein the third fixing means (33) comprises one projection (33) of the cover (23) abutting against one associated fixing part (26) of the plate (21).

3. Electrical steering column lock (1) according to claim 2, wherein one projection (33) is provided on the cover (23) so as to at least partially covering an associated fixing part (26) of the plate (21).

4. Electrical steering column lock (1) according to any one of the preceding claims, wherein the first fixing means (25) comprise fixing bolts (25) and the fixing parts (26) of the plate (21) comprise associated holes (27) for receiving the fixing bolts (25).

5. Electrical steering column lock (1) according to claim 4, wherein a projection (33) of the cover (23) is provided on an associated fixing part (26) of the plate (21) surrounding the hole (27) for receiving an associated fixing bolt (25).

6. Electrical steering column lock (1) according to any one of the preceding claims, wherein at least one fixing part (26) is provided at a corner of the plate (21), for example three fixing parts (26) are provided at corners of the plate (21).

7. Electrical steering column lock (1) according to any one of the preceding claims, wherein the second fixing means (29, 31) are provided on the plate (21) near the fixing parts (26) cooperating with the first fixing means (25) for fastening the housing (7) to the steering column (3).

8. Method for assembling the housing (7) of an electrical steering column lock (1) for locking and unlocking a steering column (3) of a motor vehicle, said housing (7) receiving a locking means (5) intended to move for locking and for unlocking the steering column (3), and comprising:
- a plate (21) comprising at least one fixing part (26), and
- a cover (23) arranged over the plate (21) for closing the housing (7), comprising said method the following steps:
- fixing the cover (23) to the plate (21), and
- fixing the cover (23) and the plate (21) together and together with the steering column (3) through at least one fixing means (25) cooperating with a fixing part (26) of the plate (21) and with a third fixing means (33) of the cover (23), charaterized in that the cover (23) is attached to the plate (21) by a material deformation process comprising a crimping process, for example a hot crimping process.

9. Method according to claim 8, wherein the cover (23) and the plate (21) are fixed together and to the steering column by bolt fixation.

## Patentansprüche

1. Elektrische Lenkradsperre (1) für ein Kraftfahrzeug der Lage zu arretieren, und eine Lenksäule (3) des Kraftfahrzeugs, wobei die elektrische Lenkradsperre (1), umfassend Entriegeln:
- Ein Verriegelungsmittel (5) vorgesehen zum Verriegeln und zum Entriegeln der Lenksäule (3) zu bewegen, und
- Ein Gehäuse (7), die die Verriegelungsmittel (5) und bestehend aus:
o eine Platte (21), die zumindest ein Befestigungsteil (26) vorgesehen an der Lenksäule befestigt zu werden, (3) durch erste Befestigungsmittel (25), und
o eine Abdeckung (23) angeordnet über der Platte (21) zum Schließen des Gehäuses (7) und an der Platte (21) durch zweite Befestigungsmittel befestigt (29, 31) aufweist, wobei die Abdeckung (23) zumindest ein drittes Befestigungsmittel mit zugeordneten ersten Befestigungsmittel zusammenwirken (25) für das Gehäuse (7) an der Lenksäule (3) Fixieren, so daß die Abdeckung (23) an der Platte befestigt (21) durch die zweiten Befestigungsmittel (29, 31) und durch die ersten Befestigungsmittel (25) an der Lenksäule (3), **dadurch gekennzeichnet, dass** die zweiten Befestigungsmittel (29, 31) umfassen, Crimpen Mittel (29, 31), beispielsweise für Heiß Crimpvorgang.

2. Elektrische Lenkradsperre (1) nach Anspruch 1, wobei die dritten Befestigungsmittel (33) einen Vorsprung (33) der Abdeckung (23) gegen einen zugeordneten Befestigungsteil (26) der Platte (21).

3. Elektrische Lenkradsperre (1) nach Anspruch 2, wobei ein Vorsprung (33) auf der Abdeckung (23), um zumindest teilweise ein zugeordnetes Befestigungsteil abdeckt (26) der Platte (21).

4. Elektrische Lenkradsperre (1) nach einem der vorhergehenden Ansprüche, wobei die ersten Befestigungsmittel (25) umfassen Befestigungs für Schrauben (25) und die Befestigungsteile (26) der Platte (21) umfassen, zugeordneten Löchern (27) Aufnahme der Befestigungsschrauben (25).

5. Elektrische Lenkradsperre (1) nach Anspruch 4, wobei ein Vorsprung (33) der Abdeckung (23) an einem zugeordneten Befestigungsteil (26) der Platte (21) rund um das Loch (27) für eine zugeordnete Empfangs Befestigungsschraube (25).

6. Elektrische Lenkradsperre (1) nach einem der vorhergehenden Ansprüche, wobei mindestens ein Befestigungsteil (26) an einer Ecke der Platte vorgesehen ist (21), beispielsweise drei Befestigungsteile (26) sind an den Ecken vorgesehen, der die Platte (21).

7. Elektrische Lenkradsperre (1) nach einem der vorhergehenden Ansprüche, wobei die zweiten Befestigungsmittel (29, 31) auf der Platte (21) in der Nähe der Befestigungsteile (26), die mit den ersten Befestigungsmittel (25) zur Befestigung des Gehäuses (7) an der Lenksäule (3).

8. Verfahren zur Montage des Gehäuses (7) einer elektrischen Lenksäulenschloss (1) zum Verriegeln und Entriegeln einer Lenksäule (3) eines Kraftfahrzeugs, wobei das Gehäuse (7) ein Vemiegelungsaufnahmemittel (5) dazu bestimmt zu bewegen zum Verriegeln und für die Lenksäule (3) entriegelt, und umfassend:
- Eine Platte (21), die zumindest ein Befestigungsteil (26), und
- Eine Abdeckung (23) über die Platte (21) angeordnet, um das Gehäuse (7) zu schließen, wobei das Verfahren die folgenden Schritte umfasst:
- Befestigung des Deckels (23) an der Platte (21), und
- Befestigung des Deckels (23) und der Platte (21) gemeinsam und zusammen mit der Lenksäule (3) durch mit einem Befestigungsteil zusammenwirkt , mindestens ein Befestigungsmittel (25) (26) der Platte (21) und mit einem dritten Befestigungsmittel (33) der Abdeckung (23),
**dadurch gekennzeichnet, dass** die Abdeckung (23) an der Platte (21) durch eine Materialverformungsvorgang ein Crimpvorgang mit beispiels Verfahren eine Heißpressung befestigt ist.

9. Verfahren nach Anspruch 8, wobei die Abdeckung (23) und die Platte (21) befestigt sind und zusammen mit der Lenksäule durch Bolzenbefestigung.

## Revendications

1. Verrouillage de la colonne de direction électrique (1) pour un véhicule capable de verrouiller et déverrouiller une colonne de direction du moteur (3) du véhicule automobile, le verrou de colonne de direction (1) électrique, comprenant:
- Un moyen de verrouillage (5) destinés à déplacer de verrouillage et de déverrouillage de la colonne de direction (3), et
- Un boîtier (7) supportant les moyens de verrouillage (5) et comprenant:
o une plaque (21) comportant au moins une partie de fixation (26) destinée à être fixée à la colonne de direction (3) par l'intermédiaire des premiers moyens de fixation (25), et
o un couvercle (23) disposé au-dessus de la plaque (21) pour fermer le boîtier (7) et fixé à la plaque (21) par l'intermédiaire des seconds moyens de fixation (29, 31), dans lequel le couvercle (23) comprend un moyen d'au moins un tiers de fixation coopérant avec des associés des premiers moyens de fixation (25) pour la fixation du boîtier (7) à la colonne de direction (3), de sorte que le couvercle (23) est fixée à la plaque (21) à travers les deuxièmes moyens de fixation (29, 31) et à travers les premiers moyens de fixation (25) pour la colonne de direction (3),
**caractérisé en ce que** les seconds moyens de fixation (29, 31) comprennent des moyens de sertissage (29, 31), par exemple pour le procédé de sertissage à chaud.

2. Serrure électrique de colonne de direction (1) selon la revendication 1, dans lequel les troisièmes moyens de fixation (33) comprend une saillie (33) du couvercle (23) butant contre une partie de fixation associée (26) de la plaque (21).

3. Électrique de verrouillage de la colonne de direction (1) selon la revendication 2, dans lequel une saillie (33) est prévu sur le couvercle (23) de manière à recouvrir au moins partiellement une pièce de fixation associée (26) de la plaque (21).

4. Verrouillage de la colonne de direction électrique (1) selon l'une quelconque des revendications précédentes, dans lequel les premiers moyens de fixation (25) comprennent des boulons de fixation (25) et les parties de fixation (26) de la plaque (21) de trous comprennent associés (27) pour recevoir les vis de fixation (25).

5. Électrique de verrouillage de la colonne de direction (1) selon la revendication 4, dans lequel une saillie (33) du couvercle (23) est prévue sur une pièce de fixation associée (26) de la plaque (21) entourant le trou (27) pour recevoir un associé boulon de fixation (25).

6. Serrure électrique de colonne de direction (1) selon l'une quelconque des revendications précédentes, dans lequel au moins une partie de fixation (26) est prévu à un coin de la plaque (21), par exemple trois éléments de fixation (26) sont prévus au niveau des coins la plaque (21).

7. Verrouillage de la colonne de direction électrique (1) selon l'une quelconque des revendications précédentes, dans lequel les seconds moyens de fixation (29, 31) sont prévus sur la plaque (21) à proximité des parties de fixation (26) coopérant avec les premiers moyens de fixation (25) pour la fixation du boîtier (7) à la colonne de direction (3).

8. Procédé d'assemblage du boîtier (7) d'une colonne de blocage de direction électrique (1) pour le verrouillage et le déverrouillage d'une colonne de direction (3) d'un véhicule à moteur, ledit boîtier (7) recevant un moyen de verrouillage (5) destiné à se déplacer pour verrouiller et pour le déverrouillage de la colonne de direction (3), et comprenant:
- Une plaque (21) comportant au moins une partie de fixation (26), et
- Un couvercle (23) disposé au-dessus de la plaque (21) pour fermer le boîtier (7), ledit procédé comprenant les étapes suivantes:
- Fixer le couvercle (23) à la plaque (21), et
- Fixer le couvercle (23) et la plaque (21) ensemble et conjointement avec la colonne de direction (3) par l'intermédiaire d'au moins un moyen de fixation (25) coopérant avec une partie de fixation (26) de la plaque (21) et un troisième des moyens de fixation (33) du couvercle (23),
**caractérisé en ce que** le couvercle (23) est fixé à la plaque (21) par un procédé de déformation de matière, comprenant un procédé de sertissage, par exemple une opération de sertissage à chaud.

9. Procédé selon la revendication 8, dans lequel le couvercle (23) et la plaque (21) sont fixées ensemble et à la colonne de direction par un boulon de fixation.
